# EUROPEAN PATENT APPLICATION

(11) **EP 4 831 462 A1**
(43) Date of publication of application: **28.10.2026**
(21) Application number: 25914546.4
(22) Date of filing: 15.08.2025
(51) Int. Cl.: F02B 37/18, B60K 26/02

(54) **TURBOCHARGER CONTROL METHOD AND APPARATUS, DEVICE, AND READABLE STORAGE MEDIUM**

(30) Priority: 31.12.2024 CN 202411988161
(71) Applicant: Chery Automobile Co., Ltd., Wuhu, Anhui 241006 (CN); Wuhu Acteco Powertrain Co., Ltd, Wuhu, Anhui 241009 (CN)
(72) Inventor: ZHAO, Shiyun, Wuhu, Anhui 241006 (CN); LAN, Jun, Wuhu, Anhui 241006 (CN); HUANG, Guoyuan, Wuhu, Anhui 241006 (CN); ZHOU, Hua, Wuhu, Anhui 241006 (CN)
(74) Representative: Adamson Jones
(86) International application number: PCT/CN2025/114960
(87) International publication number: WO 2026/144180

(57) **Abstract**

A turbocharger control method and apparatus, a device, and a readable storage medium. The method comprises: acquiring an operating condition corresponding to a vehicle (200); determining a surge line corresponding to a turbocharger (210), the surge line being used for representing a gas flow oscillation phenomenon of gas along the axial direction of a compressor; and when the operating condition and the surge line satisfy a preset relationship, adjusting a first opening angle of a wastegate valve, or adjusting a second opening angle corresponding to a vehicle accelerator pedal (220).

## Description

The present disclosure claims priority to Chinese Patent Application No. 202411988161.6, filed December 31, 2024, and entitled "METHOD AND DEVICE FOR CONTROLLING TURBOCHARGER, EQUIPMENT AND READABLE STORAGE MEDIUM", the entire contents of which are incorporated herein by reference.

### TECHNICAL FIELD

The present disclosure relates to the field of vehicles, and in particular, to a method and device for controlling a turbocharger, equipment and readable storage medium.

### BACKGROUND

With the popularization of turbochargers in vehicles, the NVH (an abbreviation for Noise, Vibration, and Harshness) level of vehicles is constantly improving, enhancing the driving and riding experiences of vehicles. However, during the driving process, turbochargers inevitably generate operational noise.

In related technologies, to reduce noise in vehicles operating in high-frequency noise areas, an additional air intake groove is provided at an air inlet of a compressor housing of the turbocharger to mitigate disturbances caused by separation from other mechanical walls, thereby reducing fluctuations at the air inlet of the compressor.

However, the aforementioned solution requires the addition of extra components, which increases the manufacturing cost of the vehicle and its system weight. Furthermore, in the event of damage to the air intake groove, it is impossible to immediately suppress the high-frequency noise generated by the turbocharger (such as Hiss noise, which is a hissing sound of the turbocharger).

### SUMMARY

The embodiments of the present disclosure provide a method and device for controlling a turbocharger, equipment and readable storage medium, which to a certain extent achieve the purpose of suppressing high-frequency noise generated by the turbocharger. The technical solution is as follows:
On one hand, a method for controlling a turbocharger is provided, which is executed by a vehicle terminal, and the method includes:
acquiring a corresponding operating condition of a vehicle, wherein the operating condition is configured to indicate a working state of an internal component of the vehicle during driving, the operating condition includes a working state of a turbocharger, and the turbocharger includes a compressor and a wastegate;
determining a surge line corresponding to the turbocharger, wherein the surge line is configured to represents an airflow oscillation phenomenon occurring along an axis direction of the compressor, the surge line is determined from a boost characteristic curve, and the boost characteristic curve is configured to represents a relationship between a gas flow rate and a boost ratio within the compressor;
adjusting a first opening angle of the wastegate or a second opening angle corresponding to an accelerator pedal of the vehicle, in a case that the operating condition conforms to a preset relationship with the surge line.

On the other hand, a device for controlling a turbocharger is provided, which is applied to a vehicle terminal, and the device includes:
an acquiring module, configured to acquire a corresponding operating condition of a vehicle, wherein the operating condition indicates a working state of internal components of the vehicle during driving, the operating condition includes a working state of a turbocharger, and the turbocharger includes a compressor and a wastegate;
a determination module, configured to determine a surge line corresponding to the turbocharger, wherein the surge line is configured to represent an airflow oscillation phenomenon occurring along an axis direction of the compressor, and the surge line is determined from a boost characteristic curve, and the boost characteristic curve is configured to represent a relationship between a gas flow rate and a boost ratio within the compressor; and
an adjusting module, configured to adjust a first opening angle of the wastegate or a second opening angle corresponding to an accelerator pedal in the vehicle, in a case that the operating condition conforms to a preset relationship with the surge line.

On the other hand, a computer-readable storage medium is provided, where at least one program is stored, and the at least one program is loaded and executed by a processor to implement the method for controlling the turbocharger as described above.

On the other hand, a computer program product or computer program is provided, which includes computer instructions stored in a computer-readable storage medium. The processor of a computer equipment reads the computer instructions from the computer-readable storage medium and executes them, enabling the computer equipment to implement the method for controlling the turbocharger as described above.

Compared with the prior art, the beneficial effects of the present disclosure are as follows:

In the embodiments of the present disclosure, when it is determined that the turbocharger in the vehicle is experiencing surge, the operating conditions of the vehicle are adjusted by adjusting the opening angle of the wastegate or the accelerator pedal to keep them away from the surge line, ensuring that the turbocharger operates in a normal state and avoiding the high-frequency hissing noise emitted by the turbocharger, which can negatively affect the driving experience of the driver. On the other hand, without the need to add additional noise reduction devices to the turbocharger, the purpose of protecting the turbocharger can be achieved by adjusting the opening angle of internal components of the vehicle, which can reduce the manufacturing cost of the vehicle to a certain extent.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
FIG. 1 is a flowchart of implementing a method for controlling a turbocharger according to some embodiments of the present disclosure;
FIG. 2 is a flowchart of a method for controlling a turbocharger according to an exemplary embodiment of the present disclosure;
FIG. 3 is a flowchart for adjusting a first opening angle based on the embodiment shown in FIG. 2;
FIG. 4 is a flowchart of a control method for controlling a turbocharger according to another exemplary embodiment of the present disclosure;
FIG. 5 is a flow block diagram of a device for controlling a turbocharger according to an exemplary embodiment of the present disclosure;
FIG. 6 is a structural block diagram corresponding to a computer equipment according to an exemplary embodiment of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

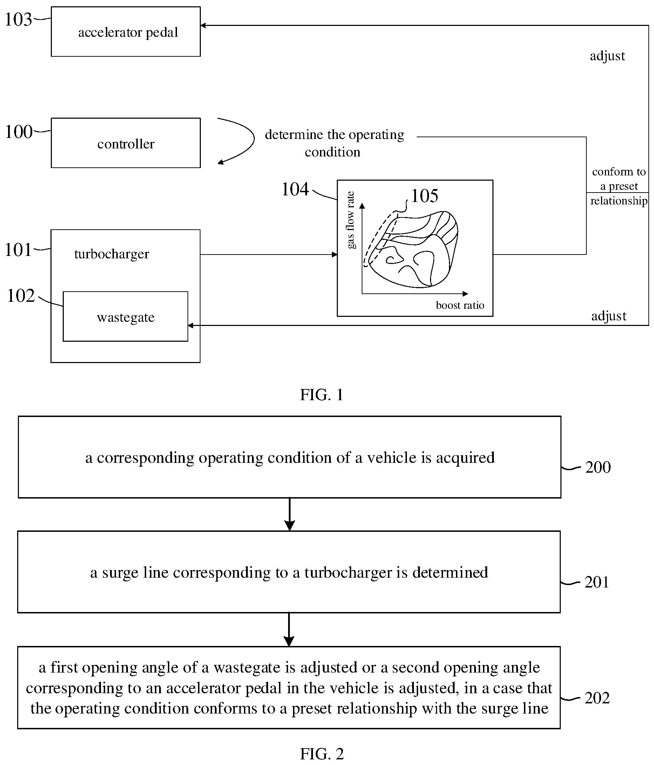

As shown in the figure, FIG. 1 illustrates a flowchart of implementing a method for controlling a turbocharger according to an embodiment of the present disclosure. The flowchart includes a vehicle, as well as internal components of the vehicle: a controller 100, a turbocharger 101, a wastegate 102, and an accelerator pedal 103. The turbocharger 101 includes the wastegate 102.

The controller 100 determines a corresponding operating condition of the vehicle based on driving data of the vehicle during driving. Here, the operating condition is used to indicate a working state of the internal components of the vehicle during driving. Illustratively, the operating condition includes a working state of the turbocharger 101.

The controller 100 generates a boost characteristic curve 104 corresponding to the turbocharger based on the working state of the turbocharger 101. The boost characteristic curve 104 is marked with a surge line 105, where the surge line is used to represent an airflow oscillation phenomenon occurring along an axis direction of the compressor in the turbocharger.

When the controller 100 determines that the operating condition conforms to a preset relationship with the surge line (such as the operating condition is close to the surge line), the controller 100 adjusts a first opening angle of the wastegate 102 to decrease, or adjusts a second opening angle of the accelerator pedal 103 to increase.

In another optional embodiment, the vehicle can also establish a communication connection with a server which is responsible for the aforementioned processes of determining the operating condition, generating the boost characteristic curve, and judging the relationship between the operating condition and the surge line. After the server determines that the operating condition conforms to the preset relationship with the surge line, the server generates an adjustment instruction, and the adjustment instruction includes at least one of adjusting the first opening angle of the wastegate 102 and adjusting the second opening angle of the accelerator pedal 102.

After receiving the adjustment instruction sent by the server, the vehicle analyzes the adjustment instruction and adjusts the wastegate 102 or the accelerator pedal 103 according to the instruction content in the adjustment instruction.

The server and the vehicle are connected through a wireless communication network or a wired communication network, which utilizes standard communication technologies and/or protocols. The network is typically the Internet, but can also be any other network, including but not limited to a Local Area Network (LAN), a Metropolitan Area Network (MAN), a Wide Area Network (WAN), a mobile, wired, or wireless network, a private network, or any combination of virtual private networks. In some embodiments, technologies and/or formats such as Hyper Text Mark-up Language (HTML) and Extensible Markup Language (XML) are used to represent data exchanged over the network. Additionally, conventional encryption technologies such as Secure Socket Layer (SSL), Transport Layer Security (TLS), Virtual Private Network (VPN), and Internet Protocol Security (IPsec) can be used to encrypt all or some links. In other embodiments, customized and/or proprietary data communication technologies can be used to replace or supplement the aforementioned data communication technologies.

The server may be an independent physical server, a server cluster or distributed system composed of multiple physical servers, or a cloud server providing basic cloud computing services such as cloud services, cloud databases, cloud computing, cloud functions, cloud storage, network services, cloud communication, middleware services, domain name services, security services, CDN (Content Delivery Network), and big data and artifact intelligence platforms. Optionally, the server can also be implemented as a node in a blockchain system.

It should be noted that the information (including but not limited to the operating condition), data (including but not limited to data for analysis, stored data, displayed data, and the like), and signals involved in the present disclosure are all authorized by the users or fully authorized by the parties. The collection, use, and processing of relevant data shall comply with the relevant laws, regulations, and standards of the relevant countries and regions.

Based on the above description, the method for controlling the turbocharger involved in the embodiments of the present disclosure will be explained. FIG. 2 is a flowchart of the method for controlling the turbocharger according to some embodiments of the present disclosure, which is illustrated by applying the method to a vehicle. As shown in FIG. 2, the method includes:
Step 200: a corresponding operating condition of the vehicle is acquired.

Optionally, the operating condition refers to the working state of internal components of the vehicle during driving. Internal components include but are not limited to, turbochargers, accelerator pedals, sensors located at various positions on the vehicle, tires, and so on. In the embodiments of the present disclosure, the operating condition includes a working state of the turbocharger.

In an optional embodiment, the operating condition is also used to indicate the working state of the vehicle during driving. The working condition state is divided by the movement form of the vehicle, the control mode of the driver, the load condition of the vehicle, the environmental condition of the vehicle, the road condition of the vehicle, and so on.

The following introduces various working states included in the operating conditions.

Divided by the movement form of the vehicle, the operating condition includes a starting stage, an acceleration stage, a constant speed stage, a deceleration stage, a turning stage, and other driving conditions.

Illustratively, the starting stage refers to a stage where the vehicle starts from a stationary state and begins to move by overcoming a static friction resistance through the output of the vehicle's internal power system. The stationary state refers to a condition where the vehicle's speed is 0. The acceleration stage refers to a stage where the vehicle continuously increases its speed from a first speed to a second speed, where the first speed is less than the second speed, the first speed is greater than or equal to 0, and the second speed is greater than 0. The constant speed stage refers to a stage where the vehicle travels at a constant speed. The deceleration stage refers to a stage where the vehicle continuously reduces its speed from a third speed to a fourth speed, where the third speed is greater than the fourth speed, the third speed is greater than 0, and the fourth speed is greater than or equal to 0. The turning stage indicates a stage where the vehicle changes its direction of travel within a horizontal plane, accompanied by the generation of lateral acceleration of the vehicle, involving changes in steering wheel input, tire slip angle, lateral force, and vehicle body posture.

In some embodiments, the turning stage occurs in combination with the starting stage, acceleration stage, and deceleration stage.

Divided by the control mode of the driver, the operating condition includes a gear shifting stage, a coasting stage, a braking stage, a throttle speed control stage, a steering stage, a reversing stage, etc. The coasting stage refers to a stage where the driver releases the accelerator pedal, the engine and drive wheels are in a non-rigid connection, and the vehicle continues to move forward due to inertia. The coasting stage includes but is not limited to out-of-gear coasting, neutral coasting, accelerating coasting, and parking coasting. The braking stage refers to a stage where the driver actively applies braking force through the vehicle's internal braking system to slow the vehicle down to a target speed or bring it to a complete stop. The target speed is greater than 0, and the braking stage includes but is not limited to emergency braking, speed control braking, and parking braking.

Illustratively, the gear shifting stage refers to a stage during which the internal transmission of the vehicle automatically or manually switches from a first gear to a second gear based on parameters such as the vehicle's driving speed, throttle opening degree, and load. The first gear and the second gear can be any of the following: Park (P), Reverse (R), Neutral (N), Drive (D), Low (L), etc. The descriptions of the first gear and the second gear provided above are merely illustrative examples, and the specific gears are determined based on the actual situation of the vehicle. This disclosure does not impose any limitations on this. The throttle speed control stage refers to a stage during which the driver maintains or slightly adjusts the vehicle's driving speed by continuously adjusting the opening degree of the accelerator pedal, without changing the vehicle's gear or applying the brakes. The steering stage refers to a stage during which the driver inputs control over a steering wheel to adjust the front wheel angle, allowing the vehicle to follow a desired trajectory. The reversing stage refers to a stage during which the driver adjusts the vehicle's gear to R, allowing the vehicle to drive in the reverse direction.

Divided by the load condition of the vehicle, the operational condition includes no-load, full-load, overload, and other operating conditions. Optionally, each vehicle has a corresponding rated load. If the actual load weight of the vehicle is equal to the rated load, the vehicle is considered to be at full-load. If the actual load weight of the vehicle is greater than the rated load, the vehicle is considered to be overloaded. If the actual load weight of the vehicle is less than a preset load, the vehicle is considered to be at no-load, where the preset load is less than the rated load.

Divided by the the environmental condition of the vehicle, the operational condition includes a high temperature and a low temperature.

Divided by the road condition of the vehicle, the operating condition includes flat roads, curves, mountain roads, and so on.

Divided by the internal components of the vehicle, the operating condition is used to indicate a corresponding working state of various internal components within the vehicle, and the the operating condition includes component data captured by the internal components and the working state of the components.

In the embodiments of the present disclosure, the operating condition includes the movement form of the vehicle, the environmental condition of the vehicle,the road condition of the vehicle, and the corresponding working state of the turbocharger. For example, the operating condition of the vehicle is a corresponding working state of the turbocharger during the acceleration stage on a mountain road. This is merely an illustrative example, and the operating condition of the vehicle can also be freely combined based on the above content to observe the corresponding working state of various components within the vehicle.

Optionally, the turbocharger consists of a compressor and an exhaust gas turbine coaxially connected. A wastegate is arranged at the exhaust gas turbine. The exhaust gas turbine rotates under the impetus of high-temperature and pressurized exhaust gas discharged from the vehicle engine, thereby driving the compressor to rotate through the rotating shaft, achieving the purpose of compressing air and increasing intake pressure.

When the intake air flow rate of the compressor in the turbocharger is reduced, the speed of the gas in the channel will be uneven and the backflow phenomenon will occur, which will cause the compressor to enter an unstable working state, and then the air flow rate will be large and small, and the pressure value will fluctuate violently. High frequency noise (such as hissing roar, which is referred to as high-frequency Hiss noise in the art) is generated by the turbocharger along with the violent vibration of the compressor.

The above phenomenon in which the turbocharger vibrates violently and emits high-frequency Hiss noise is called a surge phenomenon.

When the turbocharger surges, on one hand, it will accelerate the fatigue damage of the compressor blades and other internal components, and rapidly expand the existing cracks, which will lead to the damage of the compressor in serious cases; on the other hand, the turbocharger will emit high-frequency Hiss noise, which will bring negative experience to the driver and passengers.

Step 201: a surge line corresponding to the turbocharger is determined.

Optionally, a corresponding working state of the turbocharger is acquired, and the working state includes but is not limited to a real-time speed of the turbocharger, a compressor pressure ratio, a compressor flow rate, and so on.

The boost characteristic curve corresponding to the turbocharger is determined. The boost characteristic curve is used to represent a relationship between a gas flow rate and the boost ratio within the compressor, that is, the boost characteristic curve is used to represent the flow characteristics of the compressor.

The boost characteristic curve is marked with a surge line and a choke line. Based on the above content, it can be understood that the surge line is used to represent the airflow oscillation phenomenon occurring along the axis direction of the compressor. In this field, the surge line can be regarded as the critical state of turbocharger operation.

The choke line is used to represent the state where the inlet or outlet of the turbocharger is blocked.

The surge line and choke line are used to assist in determining the safe and effective operating range of turbocharging.

Optionally, the boost characteristic curve displays an efficiency region of the turbocharger, and the efficiency region indicates an efficiency performance of the turbocharger under different operating conditions.

Optionally, a pressure value and a gas flow rate in a front pipeline and a rear pipeline of the compressor are acquired. The front pipeline and the rear pipeline indicate an outlet pipeline and an inlet pipeline of the compressor.

Illustratively, an outlet pressure value and an outlet gas flow rate corresponding to the outlet pipeline of the compressor are acquired, or an inlet pressure value and an inlet gas flow rate corresponding to the inlet pipeline of the pressure regulator are acquired.

A ratio between the outlet pressure value and the inlet pressure value is determined so as to acquire a first ratio, and the first ratio can be understood as the boost ratio.

A minimum value and a maximum value of the inlet gas flow rate and the outlet gas flow rate are determined.

A gas flow rate range is generated based on a maximum value and a minimum value of the gas flow rate.

Corresponding boost ratios at different gas flow rates are determined based on the gas flow rate range.

A pressure boost characteristic curve is drawn and generated based on the correspondence between the gas flow rate and the boost ratio.

Illustratively, a horizontal axis of the boost characteristic curve is used to represent the gas flow rate, and a vertical axis of the boost characteristic curve is used to represent the boost ratio.

Step 202: a first opening angle of the wastegate is adjusted or a second opening angle corresponding to an accelerator pedal in the vehicle is adjusted, in a case that the operating condition conforms to the preset relationship with the surge line.

Optionally, the preset relationship refers to the occurrence of surge phenomenon in the turbocharger under this operating condition.

When it is determined that the turbocharger is about to surge, the first opening angle of the wastegate is adjusted, or the corresponding opening angle of the accelerator pedal in the vehicle is adjusted. Therefore, the surge phenomenon of the turbocharger is avoided, the generation of high-frequency hiss noise is reduced, and the service life of the turbocharger is prolonged to some extent and the driving comfort of a driver (as well as the passengers) is improved.

In an optional embodiment, a boost characteristic curve corresponding to a turbocharger is acquired, a surge line is marked on the boost characteristic curve to determine a target region corresponding to the surge line, and the target region is used to indicate an area where the turbocharger experiences surge. The target region and the surge line conform to a preset positional relationship, and the preset positional relationship can be referred to in the following description.

The determination of the surge line includes, but is not limited to, one of the following methods.

The first method is to determine a boundary line in the boost characteristic curve as the surge line.

The second method is to determine a maximum value corresponding to each curve in the boost characteristic curve, and connect the maximum value corresponding to each curve in series to form a surge line. Where, the maximum value refers to the maximum value of the gas flow rate corresponding to that curve.

Thirdly, determine the gas flow rate corresponding to the compressor inlet, square the gas flow rate to acquire the volumetric flow rate value, and multiply the volumetric flow rate value by a constant (set by relevant personnel) to determine a surge critical flow rate value. When the gas flow rate entering the compressor is less than the surge critical flow rate value, the turbocharger experiences surge. Therefore, the curve intersecting with the surge critical flow rate value in the boost characteristic curve is determined and the curve is determined as the surge line.

After determining the surge line through any of the aforementioned methods, an area above the surge line and an area between a positive direction of the vertical axis of the boost characteristic curve are considered as the target region. In this case, the surge line is located at the boundary of the target region.

In the above embodiment, the target region is defined as the early warning buffer zone near the surge line. By detecting in real-time whether the vehicle's operating conditions fall within this zone, advanced control is achieved to avoid the surge line, thereby reducing the vehicle's power loss and pump loss to some extent.

In another optional embodiment, after determining the curve corresponding to the surge line, an area within a preset distance range from the curve corresponding to the surge line is identified in the boost characteristic curve, and this area is regarded as the target region. In this case, the surge line is located at the center of the target region.

In response to the operating condition existing in the target region, the first opening angle of the wastegate is adjusted, or the second opening angle corresponding to the accelerator pedal is adjusted.

Optionally, in response to the operating condition existing in the target region, the first opening angle and the second opening angle are simultaneously adjusted.

The process of adjusting the first opening angle is described in detail below.

The turbocharger also includes an actuator, which is regarded as the wastegate actuator.

The actuator adjusts the boost pressure of the turbocharger by controlling the opening of the wastegate. When the boost pressure reaches a predetermined pressure value, the actuator pushes the connecting rod to open the bypass valve on the exhaust side of the turbocharger, allowing some of the exhaust gas to bypass the turbocharger's internal impeller and directly discharge into the exhaust pipe. This reduces the flow of exhaust gas driving the impeller, slows down the impeller speed, and thereby controls the boost pressure.

Optionally, the first opening angle is adjusted by adjusting a rotation angle of the output shaft of the actuator. Where, there is a correlation between the rotation angle and the first opening angle. Illustratively, the larger the absolute value of the rotation angle, the greater the adjusted angle of the first opening angle.

In an optional embodiment, there is a rotation angle threshold for the rotation angle. In response to the absolute value corresponding to the rotation angle of the output shaft exceeding the rotation angle threshold, the first opening angle of the wastegate is reduced. Illustratively, the rotation angle threshold is 40°. When the rotation angle of the output shaft of the actuator is 40°, the first opening angle of the wastegate is also increased to 60°. When the rotation angle of the output shaft of the actuator continues to increase to 60°, the first opening angle of the wastegate is reduced from 60° to 50°.

Optionally, in response to the absolute value corresponding to the rotation angle of the output shaft exceeding the rotation angle threshold, the first opening angle of the wastegate is reduced according to the angle excess value. Herein, the excess value refers to the difference between the absolute value of the rotation angle and the rotation angle threshold. Illustratively, when the rotation angle threshold is 40°, and the rotation angle of the output shaft of the actuator is 40°, the first opening angle of the wastegate is also increased to 60°. When the rotation angle of the output shaft of the actuator continues to increase to 60°, the excess value becomes 20° (the difference between 60° and 40°), and the first opening angle of the wastegate is reduced from 60° to 40°.

The process of adjusting the first opening angle by adjusting the rotation angle of the output shaft of the actuator is described in detail below.

By adjusting the input voltage of the actuator, the rotation angle of its output shaft can be controlled, where there is a correlation between the input voltage and the rotation angle. Illustratively, the greater the input voltage, the greater the absolute value of the corresponding rotation angle.

In embodiments of the present disclosure, when the operating condition conforms to a preset relationship with the surge line, the first opening angle of the first wastegate is reduced, or the second opening angle of the accelerator pedal is increased.

In the aforementioned embodiment, the first opening angle of the wastegate is adjusted by adjusting the rotation angle of the output shaft of the actuator. The vehicle outputs a target rotation angle based on the correlation between the rotation angle and the first opening angle, ensuring the wastegate opens precisely to the required opening degree. This avoids the backlash and hysteresis caused by traditional methods such as pneumatic-spring systems, achieving the purpose of protecting the turbocharger. Additionally, under certain specific conditions, the vehicle can be forced to retract to a safe opening degree, preventing the turbocharger from directly falling into the surge line due to actuator failure, further enhancing the robustness of the vehicle system.

In the aforementioned embodiment, the correspondence between the input voltage of the actuator and the rotation angle of the output shaft is further calibrated, achieving the objective of directly driving the first opening angle of the wastegate by detecting the voltage of the actuator. This results in smaller tracking errors for transient boost demands (such as rapid acceleration and deceleration) present in the vehicle, thereby reducing the risk of surge or hysteresis to a certain extent.

In the embodiments of the present disclosure, when it is determined that the turbocharger in the vehicle is experiencing surge, the operating conditions of the vehicle are adjusted by adjusting the opening angle of the wastegate or the accelerator pedal to keep them away from the surge line, ensuring that the turbocharger operates in a normal state and avoiding the high-frequency hissing noise emitted by the turbocharger, which can negatively affect the driving experience of the driver. On the other hand, without the need to add additional noise reduction devices to the turbocharger, the purpose of protecting the turbocharger can be achieved by adjusting the opening angle of internal components of the vehicle, which can reduce the manufacturing cost of the vehicle to a certain extent.

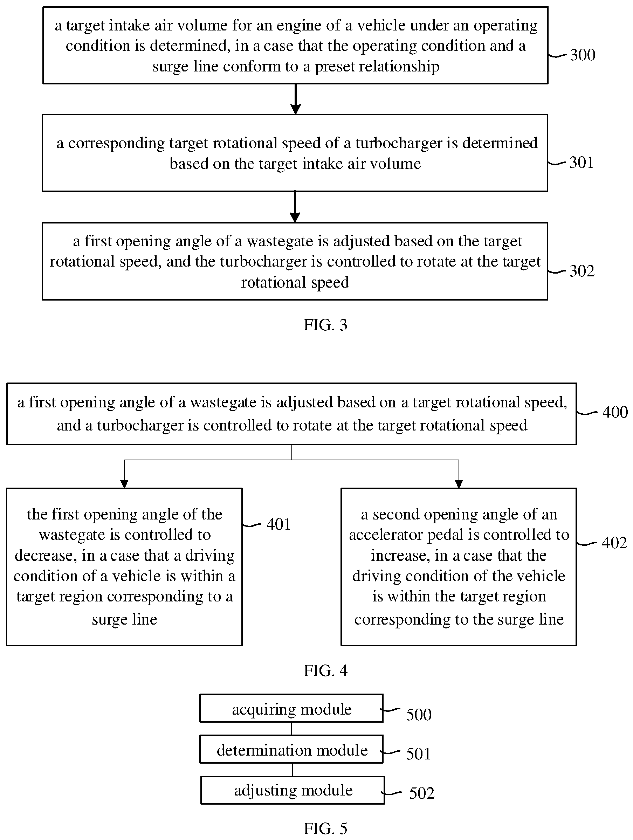

Based on the above description, further elaboration is provided on the adjustment of the first opening angle involved in step 202. FIG. 3 is a flowchart of adjusting the first opening angle of the wastegate according to some embodiments of the present disclosure, illustrating the application of this method in a vehicle. As shown in FIG. 3, the method includes:
Step 300: a target intake air volume for the engine of the vehicle under the operating condition is determined, in a case that a operating condition and a surge line conform to a preset relationship.

Optionally, the preset relationship refers to the occurrence of surge phenomenon in the turbocharger under this operating condition.

When it is determined that the turbocharger is about to surge, the first opening angle of the wastegate is adjusted. Therefore, the surge phenomenon of the turbocharger is avoided, the generation of high-frequency hiss noise is reduced, and to some extent, the service life of the turbocharger is prolonged to some extent and the driving comfort of the driver is improved.

In an optional embodiment, a boost characteristic curve correspongding to a turbocharger is acquired, a surge line is marked on the boost characteristic curve to determine a target region corresponding to the surge line, and the target region is used to indicate an area where the turbocharger experiences surge.

In response to the operating condition existing in the target region, a corresponding target intake air volume for the engine of the vehicle is determined under the operating condition.

Target intake air volume refers to the amount of gas (which can be regarded as air) required by the engine for normal operation and combustion under the corresponding operating condition.

The target intake air volume depends on at least one of: engine load, engine speed, combustion efficiency, engine design, and environmental conditions.

Engine load refers to the power or torque output by the engine. The greater the engine load, the greater the target intake air volume.

The higher the engine speed, the more gas is inhaled per cycle.

Combustion efficiency refers to a ratio of gas to combustion, also known as the air-fuel ratio.

Engine design refers to various engine designs, including but not limited to: displacement size, number of cylinders, compression ratio, etc.

Environmental conditions refer to atmospheric pressure and temperature. Under different atmospheric pressures and temperatures, density of gas (air) varies, which in turn affects the target intake air volume.

In an optional embodiment, the air-fuel ratio, operating power, and fuel consumption information of the engine are acquired. Where, the air-fuel ratio is used to indicate the mixing ratio of air and fuel in the combustion chamber of the engine, the operating power is used to indicate the power generated by the engine within a preset time, and the fuel consumption information is used to indicate the amount of fuel consumed by the engine within a preset time. The preset time is a unit time, which may be at least one of per minute, per second, per hour, etc.

Based on air-fuel ratio, operating power, and fuel consumption information, the target intake air volume is determined.

In the aforementioned embodiment, a boost management strategy is introduced, which utilizes the target intake air volume as an intermediate quantity, employs closed-loop control of the opening degree of a bypass valve, and actively avoids turbocharger surge. When the vehicle detects that the current operating conditions are approaching, a target intake air volume that can both avoid surge and meet the torque demand is determined. Subsequently, the target rotational speed corresponding to the target intake air volume is determined such that the first opening angle of the wastegate reaches a position where the turbocharger can maintain this rotational speed "just right", thereby avoiding excessive pressure relief that could lead to a power cliff.

In the aforementioned embodiment, the target intake air volume is determined based on air-fuel ratio, operating power, and fuel consumption information. Using the target rotational speed as the feedback variable, the first opening angle of the wastegate is adjusted. This not only reduces the calculation deviation of the actual intake air volume but also enables the vehicle to smoothly transition under transient operating conditions, reduces pumping losses, and achieves fuel saving and noise reduction.

Step 301: a corresponding target rotational speed of the turbocharger is determined based on the target intake air volume.

Optionally, a preset table can be acquired, which stores the correspondence between the target intake air volume and the target rotational speed, that is, different target intake air volumes correspond to different target rotational speeds.

Illustratively, the target intake air volume in the preset table is a specific numerical value, and different target rotational speeds are allocated according to this specific value. For example, the target rotational speed corresponding to the target intake air volume a is b.

Illustratively, the target intake air volume is set as a range in the preset table, and different target speeds are allocated according to the range. The range to which the target intake air volume belongs is determined, and the target speed corresponding to that range is determined as the target speed for the target intake air volume. For example, if the target intake air volume a falls within the range 1 and the target speed corresponding to range 1 is b, the target speed b is determined as the target speed corresponding to the target intake air volume a.

Optionally, a compressor pressure ratio of the engine is acquired and the compressor pressure ratio is used to describe the pressure change process of gas during compression.

Illustratively, the first pressure value, the first temperature value, and the first air flow rate corresponding to the air before compression of the engine within a preset time period are acquired; and the second pressure value, the second temperature value, and the second air flow rate corresponding to air after compression of the engine within the preset time period are acquired.

Based on the first pressure value, the first temperature value, the first air flow rate, the second pressure value, the second temperature value, and the second air flow rate, the compressor pressure ratio of the engine is determined.

Illustratively, the first pressure value is processed according to the first weight coefficient to acquire a third pressure value, and the second pressure value is processed according to the second weight coefficient to acquire a fourth pressure value.

A temperature coefficient table and an air flow rate coefficient table are acquired. The temperature system table records a correspondence between temperature values and conversion coefficients, and the air flow rate coefficient table records a correspondence between air flow rate values and conversion coefficients.

A first coefficient corresponding to the first temperature value is determined from the temperature coefficient table, and the second coefficient corresponding to the second temperature value is determined from the temperature coefficient table.

A third coefficient corresponding to the first air flow rate is determined from the air flow rate coefficient table, and a fourth coefficient corresponding to the second air flow rate is determined from the air flow rate coefficient table.

The third pressure value is processed based on the first coefficient and the third coefficient to acquire a fifth pressure value.

The fourth pressure value is processed based on the second coefficient and the fourth coefficient to acquire a sixth pressure value.

A ratio between the fifth pressure value and the sixth pressure value is determined as the compressor pressure ratio.

In the aforementioned embodiment, the compressor pressure ratio is determined through multi-parameter weighting, table lookup, and reprocessing, which improves the calculation accuracy and real-time performance of the compressor pressure ratio to a certain extent. On the one hand, the first pressure value before compression is processed through the first weight coefficient, and the second pressure value after compression is processed through the second weight coefficient, achieving the purpose of decoupling and compensating for individual errors (referring to the sensors used to acquire pressure values) and system pipeline pressure loss. On the other hand, temperature and air flow rate are introduced as factors affecting the compressor pressure ratio, and are calibrated into a temperature coefficient table and an air flow rate coefficient table, further enhancing the calculation accuracy of the compressor pressure ratio.

Step 302: the first opening angle of the wastegate is adjusted based on the target rotational speed, and the turbocharger is controlled to rotate at the target rotational speed.

In the embodiments of the present disclosure, there is a preset relationship between the rotational speed of the turbocharger and the first opening angle of the wastegate. Illustratively, the faster the rotational speed, the larger the first opening angle of the wastegate, and vice versa. That is to say, adjusting the wastegate to different opening degrees allows the turbocharger to operate at different rotational speeds.

After confirming the occurrence of surge in the turbocharger, the first opening angle of the wastegate is reduced and the turbocharger is controlled to rotate at the target speed.

In the embodiments of the present disclosure, in a case that the surge phenomenon of the turbocharger in the vehicle is determined, by adjusting the opening angle of the wastegate or the accelerator pedal, the corresponding operating condition of the vehicle is away from the surge line, so that the turbocharger is kept in a normal working state and the turbocharger is prevented from emitting high-frequency hiss noise to bring a negative driving experience to the driver. On the other hand, without the need to add additional noise reduction devices to the turbocharger, the purpose of protecting the turbocharger can be achieved by adjusting the opening angle of internal components of the vehicle, which can reduce the manufacturing cost of the vehicle to a certain extent.

Referring to FIG. 4, a method for controlling the turbocharger involved in the embodiments of the present disclosure will be described. FIG. 3 is a flowchart of the method for controlling the turbocharger according to some embodiments of the present disclosure. As shown in FIG. 3, the method includes:
Step 400: a corresponding driving condition of the vehicle is determined.

Optionally, the operating condition refers to a working state of internal components of the vehicle during driving. Internal components include, but are not limited to, a turbocharger, an accelerator pedal, sensors located at various positions on the vehicle, tires, and so on. In the embodiments of the present disclosure, the operating condition includes a working state of the turbocharger.

In an optional embodiment, the operating condition is also used to indicate the working state of the vehicle during driving. The working state is divided by the movement form of the vehicle, the control mode of the driver, the load condition of the vehicle, the environmental condition of the vehicle, the road condition of the vehicle, and so on.

Step 401: the first opening angle of the wastegate is controlled to decrease, in a case that the driving condition of the vehicle is within a target region corresponding to a surge line.

The corresponding working state of the turbocharger is acquired, and the working state includes but is not limited to the real-time speed of the turbocharger, the compressor pressure ratio, the compressor flow rate, and so on.

The boost characteristic curve corresponding to the turbocharger is determined. The boost characteristic curve is used to represent a relationship between a gas flow rate and the boost ratio within the compressor, that is, the boost characteristic curve is used to represent the flow characteristics of the compressor.

The boost characteristic curve is marked with a surge line, which represents the airflow oscillation phenomenon occurring along the axis direction of the compressor. In this field, the surge line can be regarded as the critical state of turbocharger operation.

In an optional embodiment, a boost characteristic curve corresponding to a turbocharger is acquired, a surge line is marked on the boost characteristic curve to determine a target region corresponding to the surge line, and the target region is used to indicate an area where the turbocharger experiences surge.

In response to the operating conditions existing in the target region, the first opening angle of the wastegate is reduced.

Where, the specific process for determining the first opening angle is described in step 202 and steps 300 to 302 mentioned above, and will not be further elaborated here.

Step 402: the second opening angle of the accelerator pedal is controlled to increase, in a case that the driving condition of the vehicle is within the target region corresponding to the surge line.

Optionally, in a case that it is determined that the turbocharger is about to surge under this driving condition, the second opening angle of the accelerator pedal is increased.

The second opening angle is used to indicate the position of the accelerator pedal, which is a relative position of pressure plates between fully closed (0%) and fully opened (100%). Illustratively, an angle formed between the pressure plates within the current accelerator pedal of the vehicle is 30°. When the turbocharger experiences surge, the angle between the pressure plates is increased from 30° to 50°.

In the embodiments of the present disclosure, the second opening angle affects the intake air volume and fuel supply of the engine.

To avoid surge phenomena in the turbocharger, the angle between the pressure plates inside the accelerator pedal is increased, and the intake air volume of the engine is also increased. With an increase in the intake air volume of the engine, the fuel supply also increases, further improving the fuel combustion (conversion) efficiency and reducing exhaust emissions. As the exhaust emissions decrease, the gas flow rate of gas entering the turbocharger also decreases, effectively reducing the exhaust gas conversion volume of the turbocharger and avoiding an increase in gas flow rate within the turbocharger, which could lead to increased turbulence in the operation of internal components and subsequently cause surge phenomena.

In another optional embodiment, the target rotational speed of the turbocharger is determined, and the turbocharger is operated at the target rotational speed by controlling the second opening angle of the accelerator pedal.

Illustratively, the target rotational speed k corresponding to the turbocharger is determined. At this point, the second opening angle of the accelerator pedal is increased from 30° to 40°. However, when the second opening angle of the accelerator pedal is at 40°, the rotational speed of the turbocharger is less than the target rotational speed. The second opening angle of the accelerator pedal is further increased to 50°. When the second opening angle of the accelerator pedal is at 50°, the rotational speed of the turbocharger reaches the target rotational speed.

In the embodiments of the present disclosure, in a case that the surge phenomenon of the turbocharger in the vehicle is determined, by adjusting the opening angle of the wastegate or the accelerator pedal, the corresponding operating condition of the vehicle is away from the surge line, so that the turbocharger is kept in a normal working state and the turbocharger is prevented from emitting high-frequency hiss noise to bring a negative driving experience to the driver. On the other hand, without the need to add additional noise reduction devices to the turbocharger, the purpose of protecting the turbocharger can be achieved by adjusting the opening angle of internal components of the vehicle, which can reduce the manufacturing cost of the vehicle to a certain extent.

Please refer to FIG. 5, which illustrates a structural block diagram of a control device for a turbocharger according to some embodiments of the present disclosure. The device includes the following components.

A acquiring module 500, configured to acquire an operating condition corresponding to a vehicle, and the operating condition indicates a working state of internal components of the vehicle during driving. The operating condition includes a working state of a turbocharger, which includes a compressor and a wastegate.

A determination module 501, configured to determine a surge line corresponding to the turbocharger. The surge line is used to represent the airflow oscillation phenomenon occurring along the axis direction of the compressor. The surge line is determined from the boost characteristic curve, and the boost characteristic curve is used to represent the relationship between the gas flow rate and the boost ratio within the compressor.

An adjusting module 502, configured to adjust the first opening angle of the wastegate or the second opening angle corresponding to the accelerator pedal of the vehicle , in a case that the operating condition conforms to a preset relationship with the surge line.

In an optional embodiment, the determination module 501 is configured to determine a target region in the boost characteristic curve that corresponds to the surge line, where the target region and the surge line conform to a preset positional relationship.

The adjusting module 502 is configured to adjust the first opening angle or adjust the second opening angle in response to the operating condition existing in the target region.

In an optional embodiment, the turbocharger further includes an actuator.

The adjusting module 502 is configured to adjust the first opening angle by adjusting the rotation angle of the output shaft of the actuator; where, there is a correlation between the rotation angle and the first opening angle.

In an optional embodiment, the adjusting module 502 is configured to control the rotation angle of the output shaft of the actuator by adjusting the input voltage of the actuator, where there is a correlation between the input voltage and the rotation angle.

The adjusting module 502 is used to adjust the first opening angle by adjusting the rotation angle of the output shaft of the actuator.

In an optional embodiment, the determination module 501 is configured to determine the target intake air volume corresponding to the engine of the vehicle under the operating condition, in a case that the operating condition and the surge line conform to a preset relationship.

The determination module 501 is configured to determine the target rotational speed corresponding to the turbocharger based on the target intake air volume.

The adjusting module 502 is configured to adjust the first opening angle of the wastegate based on the target rotational speed, thereby controlling the turbocharger to rotate at the target rotational speed.

In an optional embodiment, the acquiring module 500 is configured to acquire the air-fuel ratio, operating power, and fuel consumption information of the engine. The air-fuel ratio is used to indicate the mixing ratio of air and fuel in the combustion chamber of the engine, the operating power is used to indicate the power generated by the engine within a preset time, and the fuel consumption information is used to indicate the amount of fuel consumed by the engine within the preset time.

The determination module 501 is configured to determine the target intake air volume based on the air-fuel ratio, the operating power, and the fuel consumption information.

The acquiring module 500 is configured to acquire the compressor pressure ratio of the engine, which describes the pressure change process of gas during compression.

The determination module 501 is configured to determine the target based on the compressor pressure ratio and the target intake air volume.

In an optional embodiment, the first pressure value, first temperature value, and first air flow rate corresponding to air before compression of the engine within a preset time period are acquired.

The acquiring module 500 is configured to acquire the second pressure value, the second temperature value, and the second air flow rate corresponding to air after compression of the engine within the preset time period.

The determination module 501 is configured to process the first pressure value according to a first weight coefficient to acquire a third pressure value, and process the second pressure value according to a second weight coefficient to acquire a fourth pressure value.

The acquiring module 500 is configured to acquire a temperature coefficient table and an air flow rate coefficient table. The temperature system table records the correspondence between the temperature values and the conversion coefficients, and the air flow rate coefficient table records the correspondence between the air flow rate values and the conversion coefficients.

The determination module 501 is used to determine the first coefficient corresponding to the first temperature value from the temperature coefficient table, and to determine the second coefficient corresponding to the second temperature value.

The determination module 501 is configured to determine the third coefficient corresponding to the first air flow rate from the air flow rate coefficient table, and to determine the fourth coefficient corresponding to the second air flow rate from the air flow rate coefficient table.

The determination module 501 is configured to process the third pressure value based on the first coefficient and the third coefficient to acquire a fifth pressure value.

The determination module 501 is configured to process the fourth pressure value based on the second coefficient and the fourth coefficient to acquire a sixth pressure value.

The determination module 501 is configured to determine the ratio between the fifth pressure value and the sixth pressure value as the compressor pressure ratio.

In the device provided in the embodiments of the present disclosure, in a case that the surge phenomenon of the turbocharger in the vehicle is determined, by adjusting the opening angle of the wastegate or the accelerator pedal, the corresponding operating condition of the vehicle is away from the surge line, so that the turbocharger is kept in a normal working state and the turbocharger is prevented from emitting high-frequency hiss noise to bring a negative driving experience to the driver. On the other hand, without the need to add additional noise reduction devices to the turbocharger, the purpose of protecting the turbocharger can be achieved by adjusting the opening angle of internal components of the vehicle, which can reduce the manufacturing cost of the vehicle to a certain extent.

It should be noted that the control device for a turbocharger provided in the above embodiment is exemplified only based on the division of the above functional modules. In practical applications, the above functions can be allocated to different functional modules as needed, that is, the internal structure of the device can be divided into different functional modules to complete all or part of the functions described above. In addition, the control device for a turbocharger provided in the above embodiment and the embodiment of the control method for a turbocharger belong to the same concept. The specific implementation process is detailed in the method embodiment and will not be further elaborated here.

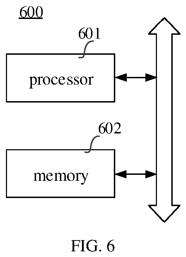

FIG. 6 illustrates the structural block diagram of a computer equipment 600 according to some embodiments of the present disclosure. The computer equipment 600 can be a portable mobile terminal, such as a smartphone, tablet computer, MP3 player (Moving Picture Experts Group Audio Layer III), MP4 (Moving Picture Experts Group Audio Layer IV) player, laptop, or desktop computer. The computer equipment 600 may also be referred to as a user device, portable terminal, laptop terminal, desktop terminal, or other names. Optionally, the computer equipment 600 can also be implemented as a removable device, such as a removable intelligent terminal like a vehicle terminal.

Generally, the computer equipment 600 includes: a processor 601 and a memory 602.

The processor 601 can include one or more processing cores, such as a 4-core processor, an 8-core processor, etc. The processor 601 can be implemented using at least one hardware form of DSP (Digital Signal Processing), FPGA (Field-Programmable Gate Array), or PLA (Programmable Logic Array). The processor 601 can also include a main processor and a co-processor. The main processor is a processor used for processing data in the awake state, also known as a CPU (Central Processing Unit). The co-processor is a low-power processor used for processing data in the standby state. In some embodiments, the processor 601 can be integrated with a GPU (Graphics Processing Unit), which is responsible for rendering and drawing the content required to be displayed on the display screen. In some embodiments, the processor 601 can also include an AI (Artificial Intelligence) processor, which is used for processing computational operations related to machine learning.

The memory 602 may include one or more computer-readable storage media, which may be non-transitory. The memory 602 may also include high-speed random access memory, as well as non-volatile memory, such as one or more disk storage devices, flash memory storage devices. In some embodiments, the non-transitory computer-readable storage media in the memory 602 are used to store at least one instruction for execution by the processor 601 to implement the method for controlling a turbocharger provided by the method embodiments in the present disclosure.

Those skilled in the art can understand that the structure shown in FIG. 6 does not constitute a limitation on the computer equipment 600, and may include more or fewer components than shown, or combine certain components, or adopt different component arrangements.

The present disclosure further provides a computer-readable storage medium, in which at least one instruction, at least one program, code set, or instruction set is stored. The at least one instruction, the at least one program, the code set, or the instruction set is loaded and executed by a processor to implement the method for controlling the turbocharger provided by the method embodiments described above.

The present disclosure provides a computer program product or computer program, which includes computer instructions stored in a computer-readable storage medium. The processor of a computer equipment reads the computer instructions from the computer-readable storage medium and executes them, enabling the computer equipment to perform the method for controlling a turbocharger provided by the aforementioned method embodiments.

Those skilled in the art can understand that all or part of the steps to implement the above embodiments can be accomplished through hardware, or can be instructed to relevant hardware through a program. The program can be stored in a computer-readable storage medium, and the aforementioned storage medium can be a read-only memory, a magnetic disk, an optical disk, or the like.

Described above are merely preferred embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A method for controlling a turbocharger, executed by a vehicle terminal, the method comprising:
acquiring a corresponding operating condition of a vehicle, wherein the operating condition is configured to indicate a working state of an internal component of the vehicle during driving, the operating condition comprises a working state of a turbocharger, and the turbocharger comprises a compressor and a wastegate;
determining a surge line corresponding to the turbocharger, wherein the surge line is configured to represent an airflow oscillation phenomenon occurring along an axis direction of the compressor, the surge line is determined from a boost characteristic curve, and the boost characteristic curve is configured to represent a relationship between a gas flow rate and a boost ratio within the compressor; and
adjusting a first opening angle of the wastegate or a second opening angle corresponding to an accelerator pedal of the vehicle, in a case that the operating condition conforms to a preset relationship with the surge line.

2. The method according to claim 1, wherein the adjusting the first opening angle of the wastegate or the second opening angle corresponding to the accelerator pedal of the vehicle in a case that the operating condition conforms to the preset relationship with the surge line comprises:
determining a target region corresponding to the surge line in the boost characteristic curve, wherein the target region and the surge line conform to a preset positional relationship; and
adjusting the first opening angle or the second opening angle in response to the operating condition existing in the target region.

3. The method according to claim 1 or 2, wherein the turbocharger further comprises an actuator; and the adjusting the first opening angle comprises:
adjusting the first opening angle by adjusting a rotation angle of an output shaft of the actuator;
wherein there is a correlation between the rotation angle and the first opening angle.

4. The method according to any one of claims 1 to 3, wherein the adjusting the first opening angle by adjusting the rotation angle of the output shaft of the actuator comprises:
controlling the rotation angle of the output shaft of the actuator by adjusting an input voltage of the actuator, wherein there exists a correlation between the input voltage and the rotation angle; and
adjusting the first opening angle by adjusting the rotation angle of the output shaft of the actuator.

5. The method according to any one of claims 1 to 4, wherein the adjusting the first opening angle of the wastegate in a case that the operating condition conforms to the preset relationship with the surge line comprises:
determining a target intake air volume corresponding to an engine of the vehicle under the operating condition, in a case that the operating condition and the surge line conform to the preset relationship;
determining a corresponding target rotational speed of the turbocharger based on the target intake air volume; and
adjusting the first opening angle of the wastegate based on the target rotational speed, and controlling the turbocharger to rotate at the target rotational speed.

6. The method according to any one of claims 1 to 5, wherein the determining the target intake air volume corresponding to the engine of the vehicle under the operating condition comprises:
acquiring an air-fuel ratio, an operating power, and fuel consumption information of the engine, wherein the air-fuel ratio is configured to indicate a mixing ratio of air and fuel in a combustion chamber of the engine, the operating power is configured to indicate power generated by the engine within a preset time, and the fuel consumption information is configured to indicate an amount of fuel consumed by the engine within the preset time;
determining the target intake air volume based on the air-fuel ratio, the operating power, and the fuel consumption information;
the determining the corresponding target rotational speed of the turbocharger based on the target intake air volume comprises:
acquiring a compressor pressure ratio of the engine, wherein the compressor pressure ratio is configured to describe a pressure change process of gas during compression; and
determining the target rotational speed based on the compressor pressure ratio and the target intake air volume.

7. The method according to any one of claims 1 to 6, wherein the acquiring of the compressor pressure ratio of the engine comprises:
acquiring a first pressure value, a first temperature value and a first air flow rate corresponding to air before compression of the engine within a preset time period;
acquiring a second pressure value, a second temperature value, and a second air flow rate corresponding to air after compression of the engine within the preset time period;
processing the first pressure value according to a first weight coefficient to acquire a third pressure value, and processing the second pressure value according to a second weight coefficient to acquire a fourth pressure value;
acquiring a temperature coefficient table and an air flow rate coefficient table, wherein the temperature system table records a correspondence between temperature values and conversion coefficients, and the air flow rate coefficient table records a correspondence between air flow rate values and conversion coefficients;
determining a first coefficient corresponding to the first temperature value from the temperature coefficient table, and determining a second coefficient corresponding to the second temperature value;
determining a third coefficient corresponding to the first air flow rate from the air flow rate coefficient table, and determining a fourth coefficient corresponding to the second air flow rate;
processing the third pressure value based on the first coefficient and the third coefficient to acquire a fifth pressure value;
processing the fourth pressure value based on the second coefficient and the fourth coefficient to acquire a sixth pressure value; and
determining a ratio between the fifth pressure value and the sixth pressure value as the compressor pressure ratio.

8. A device for controlling a turbocharger, applied to a vehicle terminal, the device further comprising:
an acquiring module, configured to acquire a corresponding operating condition of a vehicle, wherein the operating condition indicates a working state of internal components of the vehicle during driving, the operating condition comprises a working state of a turbocharger, and the turbocharger comprises a compressor and a wastegate;
a determination module, configured to determine a surge line corresponding to the turbocharger, wherein the surge line is configured to represent an airflow oscillation phenomenon occurring along an axis direction of the compressor, and the surge line is determined from a boost characteristic curve, and the boost characteristic curve is configured to represent a relationship between a gas flow rate and a boost ratio within the compressor; and
an adjusting module, configured to adjust a first opening angle of the wastegate or a second opening angle corresponding to an accelerator pedal in the vehicle, in a case that the operating condition conforms to a preset relationship with the surge line.

9. A computer equipment comprising a processor and a memory, wherein at least one program is stored in the memory, and the at least one program is loaded and executed by the processor to implement the method for controlling a turbocharger according to any one of claims 1 to 7.

10. A computer-readable storage medium, wherein at least one program is stored, and the at least one program is loaded and executed by a processor to implement the method for controlling a turbocharger according to any one of claims 1 to 7.
